(19) Europäisches Patentamt / European Patent Office / Office européen des brevets

(11) **EP 4 603 815 B1**

(12) **EUROPEAN PATENT SPECIFICATION**

(45) Date of publication and mention
of the grant of the patent:
**08.04.2026   Bulletin 2026/15**

(21) Application number: **24158017.4**

(22) Date of filing: **16.02.2024**

(51) International Patent Classification (IPC):
*G01K 7/42* (2006.01)     *F03D 17/00* (2016.01)
*H02K 11/25* (2016.01)     *H02P 29/00* (2016.01)
*H02P 21/00* (2016.01)     *H02P 29/60* (2016.01)

(52) Cooperative Patent Classification (CPC):
**G01K 7/42; H02K 11/25; H02P 21/00; H02P 29/60;**
F03D 17/018; F03D 17/036; H02P 2101/15

(54) **TEMPERATURE ESTIMATION MODEL AND METHOD FOR AN ELECTRICAL GENERATOR**

TEMPERATURSCHÄTZUNGSMODELL UND VERFAHREN FÜR EINEN ELEKTRISCHEN GENERATOR

MODÈLE D'ESTIMATION DE TEMPÉRATURE ET PROCÉDÉ POUR UN GÉNÉRATEUR ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**20.08.2025   Bulletin 2025/34**

(73) Proprietor: **Siemens Gamesa Renewable Energy A/S**
**7330 Brande (DK)**

(72) Inventors:
• **Nilifard, Reza**
**7400 Herning (DK)**
• **Azar, Ziad**
**Sheffield, S10 4ED (GB)**
• **Liang, Dawei**
**Sheffield, S1 4EE (GB)**
• **Madani, Nima**
**7100 Vejle (DK)**
• **Zhu, Ziqiang**
**Sheffield, S10 5TR (GB)**

(74) Representative: **SGRE-Association Siemens Energy Global GmbH & Co. KG SE I IM P Intellectual Property Siemenspromenade 9 91058 Erlangen (DE)**

(56) References cited:
• **CHEN XIAO ET AL: "Thermal Modeling of Hollow Conductors for Direct Cooling of Electrical Machines", IEEE TRANSACTIONS ON INDUSTRIAL ELECTRONICS, IEEE SERVICE CENTER, PISCATAWAY, NJ, USA, vol. 67, no. 2, 1 February 2020 (2020-02-01), pages 895 - 905, XP011748149, ISSN: 0278-0046, [retrieved on 20191002], DOI: 10.1109/TIE.2019.2899542**
• **LIANG DAWEI ET AL: "Tracking of Winding and Magnet Hotspots in SPMSMs Based on Synergized Lumped-Parameter and Sub-Domain Thermal Models", IEEE TRANSACTIONS ON ENERGY CONVERSION, IEEE SERVICE CENTER, PISCATAWAY, NJ, US, vol. 37, no. 3, 8 March 2022 (2022-03-08), pages 2147 - 2161, XP011917623, ISSN: 0885-8969, [retrieved on 20220309], DOI: 10.1109/TEC.2022.3158017**

**Description**

Field of invention

The present invention relates to a method and to a corresponding arrangement of temperature estimation of a, in particular permanent magnet synchronous, electrical generator.

Art Background

In direct-drive (DD) permanent magnet (PM) wind turbine generators, higher torque densities result in a higher wind turbine (WT) output power, but on the other hand, it may also result in higher operating temperatures due to losses and may limit the power capability due to irreversible PM demagnetisation. In addition, the high generated temperature may have a significant effect on the machine lifetime, particularly for the most vulnerable generator components, e.g. stator winding insulation and PM. More specifically, the lifetime of the winding insulation is significantly affected by the temperature of stator winding. Therefore, the lifetime of winding insulation is of particular importance, which decreases significantly beyond the temperature specified by the manufacturers. Furthermore, irreversible partial demagnetization could be another issue when the PM temperature exceeds its maximum allowable temperature.

Consequently, higher winding and magnet temperatures reduce the generator component lifespan, which will result in lower generator efficiency, lower power density, and reliability.

Therefore, their temperature information, especially the hotspot temperatures, is important to ensure safe and reliable operation under normal and overload conditions (e.g., power boost).

Although the winding and PM temperatures can be measured by thermal sensors, single or a few thermal sensors may inadequately measure the spatial temperature variations and hotspot temperature since the winding component usually has a large temperature gradient, which is sensitive to the location of the installed thermal sensor. Meanwhile, the installed thermal sensors also give rise to an increase in the cost, not only for themselves but also for the maintenance. Meanwhile, an array of thermal sensors increases the number of connection channels between the generator with the controller, which has a detrimental impact on the system reliability.

Up to date, the sensorless temperature estimation for generators relies on two mainstreams, i.e., the electrical parameter identification-based methods and thermal model-based methods.

Firstly, the electrical parameter identification-based methods utilize the temperature dependencies of the winding resistance (~0.4%/°C) and/or PM flux linkage (~-0.1%/°C) to estimate the overall average winding and PM temperatures. However, the electrical parameter identification methods suffer from several drawbacks. 1) Due to the rank-deficient issue, the identification methods usually require additional injected perturbation signals, e.g., currents and position offsets, which will introduce negative impacts on the system stability. 2) The reflected temperatures of the winding resistance and PM flux linkage are sensitive to measurement errors due to their low temperature coefficients, as well as manufacturing tolerances and imperfections. Meanwhile, they may still be much lower than the corresponding hotspot temperatures, although the hotspot temperature is more important.

Secondly, the thermal model-based methods are developed based on the heat transfer theorem to describe the thermal behavior of the system. However, due to inappropriate assumptions in the existing thermal model, i.e., either "I-type" or "T-type" networks, there may be significant deviations in both the average and hotspot temperature estimation. As a consequence, they may be not qualified to substitute to functions of thermal sensors due to low estimation accuracy, especially for the component having large temperature gradients, e.g., winding.

US2012226483 (A1) discloses a motor temperature estimation based on thermal model. A vehicle includes a power source, a motor, and a computing device. The power source provides electrical energy to the motor, and the motor generates rotational motion from the electrical energy received. The computing device is configured to estimate a temperature of the motor in real time based at least in part on a thermal model of the motor. The thermal model includes a plurality of nodes and at least one thermal resistance. Each node represents a region of the motor and each thermal resistance represents a heat transfer path between at least two of the nodes. A method includes solving one or more energy balance equations to determine a temperature change at each node and estimating the temperature of the motor in real time based at least in part on the temperature change at each node and at least one of the thermal resistances in the thermal model. US2019114385 (A1) discloses a motor thermoanalysis method with temperature field directly coupled with heat circuit. A motor thermal analysis method with a temperature field directly coupled with a thermal circuit is used for modeling partial parts of the motor, and a thermal circuit method is used for modeling other parts. A temperature field is contacted with a thermal circuit through an equivalent temperature boundary and an equivalent convection boundary.

The thermal circuit part is composed of one-dimensional finite elements, and two connecting boundaries are deemed as two boundary elements. An element stiffness matrix, an element loading matrix and an element mass matrix corresponding to the one-dimensional finite elements and the boundary elements are respectively overlaid to a global stiffness matrix, a global loading matrix and a global mass matrix, and the distribution of temperature in the temperature field and the distribution of temperature in the thermal circuit are obtained simultaneously **by** solving a whole system of linear equations.

US2020341062 (A1) discloses a System and Method for Estimating Temperature and Heat Loss in Electric Motors. A system for thermal management of an electric motor, uses an augmented thermal circuit model of the electric motor, which relates temperatures of a set of nodes of the thermal circuit model with the temperature measurements at a first subset of nodes and heat losses of heat sources at a second subset of nodes, for joint estimation of the temperatures at the entire set of nodes and values of the heat losses in the second subset of nodes. The system solves the joint estimation using an estimator/observer. The system outputs one or combination of the values of the temperatures of the set of nodes and the values of the heat losses.

CHEN XIAO ET AL: "Thermal Modeling of Hollow Conductors for Direct Cooling of Electrical Machines", IEEE TRANSACTIONS ON INDUSTRIAL ELECTRONICS, IEEE SERVICE CENTER, PISCATAWAY, NJ, USA, vol.67, no. 2, 1 February 2020 (2020-02-01), pages 895-905, discloses thermal modeling of electrical machines.

LIANG DAWEI ET AL: "Tracking of Winding and Magnet Hotspots in SPMSMs Based on Synergized Lumped-Parameter and Sub-Domain Thermal Models", IEEE TRANSACTIONS ON ENERGY CONVERSION, IEEE SERVICE CENTER, PISCATAWAY, NJ, US, vol. 37, no. 3, 8 March 2022 (2022-03-08), pages 2147-2161, discloses to track hotspots in synchronous machines.

It has however been observed that the conventional methods for temperature estimation for generators do not in all circumstances or under all conditions give accurate estimations of temperature in particular for particular generator components having substantial temperature gradients.

Thus, there may be a need for a method and a corresponding arrangement of temperature estimation of a permanent magnet synchronous electrical generator, wherein temperature estimation may be improved and/or the accuracy may be enhanced, in particular for generator components or portions which may exhibit a substantial temperature gradient across their respective dimension or extent.

## Summary of the Invention

According to the present invention, it is provided a method, according to claim 1, of temperature estimation of a electrical generator including plural generator components comprising a rotor, and a stator having teeth and windings, the method comprising: receiving (e.g. measured) values of electrical and/or mechanical operation parameters of the generator; using a thermal model, including or implemented in software, for the generator comprising plural elementary thermal modelling elements partially connected to each other in a network for modelling heat conduction, each generator component being modelled by one or more of the plural elementary thermal modelling elements wherein at least one elementary thermal modelling element comprises: for each of plural directions two conduction thermal resistances modelling thermal resistances between the respective portion of the generator component towards its boundary in opposite directions, a star point which is connected to (e.g. three) plural mid points between the respective two conduction thermal resistances; a heat providing and/or absorbing system modelling a heat source and/or heat sink; a first and a second error compensation thermal resistance connected in series between the star point and the heat providing and/or absorbing system; the method comprising: estimating plural values of temperature for the plural elementary modelling elements by feeding the plural values of the operational parameters into the thermal model and modelling heat transfers between and within the plural generator components or portions according to connectivities and thermal resistances within the network and within the elementary thermal modelling elements; wherein for each elementary thermal modelling element the following holds: two first serially connected conduction thermal resistances are provided for a first direction, two second serially connected conduction thermal resistances are provided for a second direction, two third serially connected conduction thermal resistances are provided for a third direction, wherein a first point between the serially connected first two conduction thermal resistances is connected to the star point, wherein a second point between the serially connected second two conduction thermal resistances is connected to the star point, wherein a third point between the serially connected third two conduction thermal resistances is connected to the star point, wherein temperatures at two ends of the two first serially connected conduction thermal resistances are associated with the boundary temperatures of the respective elementary thermal modelling element according to the first direction, wherein temperatures at two ends of the two second serially connected conduction thermal resistances are associated with the boundary temperatures of the respective elementary thermal modelling element according to the second direction, wherein temperatures at two ends of the two third serially connected conduction thermal resistances are associated with the boundary temperatures of the respective elementary thermal modelling element according to the third direction.

The generator may for example provide AC power in multiple phases, such as three phases or a higher number of phases. The rotor may be an outer rotor or an inner rotor.

The generator may be a permanent magnet synchronous electrical generator including a rotor with permanent magnets. In other embodiments the generator may be an electrically excited asynchronous electrical generator, or doubly fed induction machine.

The permanent magnets may for example be mounted at an outer rotor house which may rotatably be supported **by** a bearing relative to the stator in order to allow rotation of the rotor with respect to the stator. The stator may be a single segment or a multiple segment stator. The stator may have one multi-phase winding set or multiple plural phase winding sets. Each winding set, for example three-phase winding set, may be connected to a respective converter, in particular comprising an AC/DC converter portion, a DC link and a DC/AC converter portion. Thereby, the converters may be configured to convert a variable frequency AC power stream to a fixed frequency AC power stream which may then be supplied to a utility grid.

The method may be implemented in software and/or hardware and may for example be performed by a generator controller or a processing portion separate from a generator controller.

The electrical and/or mechanical operation parameters of the generator may for example include current measurement values and/or a rotational speed of the generator and/or coolant and ambient temperatures. The operation parameters of the generator may for example be measured or may be estimated from other quantities relating to the performance or the operation of the generator.

The thermal model is included or being implemented or represented in software and/or hardware, in particular including a software model.

The thermal model may for example be implemented in analogy to an electrical circuit including respective thermal resistances within the elementary thermal modelling elements which are partially connected to each other. Each elementary thermal modelling element by itself may be implemented in analogy to an electrical circuit having plural conduction thermal resistances and also having the first and the second error compensation thermal resistances, as specified.

The model may simulate a heat flow within and across the multiple generator components or generator component portions according to the spatial arrangement and connections between the plural elementary thermal modelling elements. Also within each of the elementary thermal modelling elements, the heat flow is modelled according to the respective (three times two) conduction thermal resistances and the first and the second error compensation thermal resistances.

For each generator component, for example the rotor house, the permanent magnets, the windings, the lamination of the stator or the stator teeth one or more elementary thermal modelling elements may be utilized, in order for example to model different spatial portions of the respective generator component. The number of the elementary thermal modelling elements for modelling one generator component or one generator component portion may be selected according to the desired accuracy of the temperature estimation and/or depending on the available computing resources.

The thermal model may in particular comprise plural thermal model segments, each segment corresponding to a respective axial region or axial position. Due to a substantial cylindrical symmetry of the generator, the thermal model segments may substantially be similar to each other. Thereby implementing the thermal modelling or setting up the thermal model may be simplified.

The conduction thermal resistances within a particular elementary thermal modelling element modelling a particular generator component or generator component portion may be based or may be derived from the geometry and/or material and/or extent of the respective generator component or generator component portion within the modelled spatial region. The same may hold for the first and the second error compensation thermal resistances.

It should also be understood that the respective conduction thermal resistances and/or the first and second error compensation thermal resistances may be determined based on calibration data including measured temperatures at the boundaries and/or the average temperature and/or a hotspot temperature of the respective generator component or generator component portion. Thus, the respective conduction thermal resistances and the first and second error compensation thermal resistances of each of the elementary thermal modelling elements may represent adjustable model parameters which may have previously been determined or calculated for example based on structure details, such as material, dimension and/or geometry and/or shape of the considered component and/or based on measurements of temperatures.

The provision of the first and second error compensation thermal resistances within at least one of the elementary thermal modelling elements (or all of the elementary thermal modelling elements) may enable to more accurately characterize or determine the temperature (distribution) within a generator component or a generator component portion. In particular, the first and the second error compensation thermal resistances may enable to accurately estimate average temperature and hotspot temperature (maximum temperature of the component or component portion being modelled by the considered elementary thermal modelling element), of respective generator component or generator component portion being modelled by the considered elementary thermal modelling element.

In conventional thermal models it may not have been possible to determine an average temperature as well as a hotspot temperature of a considered generator component or component portion. When both, the average temperature as well as a maximum temperature of a particular generator component portion or generator component can be estimated, the generator may be controlled in an improved manner and may be diagnosed in an improved manner.

The heat providing and/or absorbing system may for example enable to model heat storage due to a particular heat storage capacity of the considered generator portion or generator component. Furthermore, thereby also heat generation may be modelled which may occur for example in a winding or winding coil. The heat providing and/or absorbing system may also thereby model loss input and thermal capacity of the different generator components or component portions.

According to an embodiment of the present invention, a temperature value estimated between the first and the second error compensation resistance is considered the mid-point temperature (e.g. theta_mid), which may be the maximum temperature (rise) caused by the internal loss generation.

The maximum temperature (rise) may be a space-related value and defined as the maximum temperature across the component. The mid-point temperature may be a temperature in the centre/middle of the component or component portion being modelled.

Moreover, the other temperature value estimated between the second error compensation resistance and the heat providing and/or absorbing system is considered as an average temperature (e.g. spatially averaged across the component or component portion modelled by this elementary thermal modelling element) (e.g. theta_avg), of the respective component or portion portion.

Each of the elementary thermal modelling elements may be implemented or may comprise a circuitry of connected thermal resistances. In particular, two conduction thermal resistances may be connected in series, for each of the plural directions, for example for three directions. Midpoints of the serial connected three pairs of conduction thermal resistances may be connected to each other at the star point. To the star point also the series connection of the first and second error compensation thermal resistances are connected. Furthermore, the first error compensation thermal resistance, the second error compensation thermal resistance and the heat providing and/or absorbing system are connected in series to the star point. Thereby, the first and the second error compensation thermal resistances are connected to each other and the temperature as estimated between those two compensation thermal resistances is considered as a hotspot temperature of the respective generator component or generator component portion modelled by the considered elementary thermal modelling element.

When there is no internal heat generation, the temperature estimated at the star point can represent the spatial midpoint temperature physically. However, when the system has a heat providing system, it is assumed that all heat is concentrated in the spatial midpoint (spatial or geometrical center) instead of distributed throughout the whole solid in reality. Consequently, the estimated temperature at the star point is overestimated. Therefore, the first compensation thermal resistance is obtained based on the multi-dimensional conduction heat transfer equation to compensate for the temperature difference estimated from the star point to the real midpoint temperature.

Therefore, the temperatures estimated between those two compensation thermal resistances is the maximum temperature rise caused by the internal heat generation and can be regarded as the maximum temperature (of the component or component portion modelled) in most cases.

Thereby, a most critical region or a most critical temperature within the modelled generator portion may be identified.

According to an embodiment of the present invention, a temperature value determined between the second error compensation resistance and the heat providing and/or absorbing system is considered as an average temperature (e.g. theta_avg) of the respective component or component portion.

The second error compensation resistance is in the considered elementary thermal modelling element connected to the heat providing and/or absorbing system and the temperature determined between the second error compensation resistance and the heat providing and/or absorbing system considered as the average temperature of the respective component or component portion being modelled by the considered elementary thermal modelling element.

The second compensation thermal resistance is used to represent the temperature drops between the real midpoint temperature and the average temperature, which can be analytically determined by solving the multi-dimensional conduction heat transfer equation.

The average temperature of the respective component or component portion may e.g correspond to a spatially averaged (mean) temperature of the component or component portion. Thereby the overall or mean temperature of the modelled component may be obtainable, which may be useful to diagnose the condition of the respective component.

According to an embodiment of the present invention both a maximum temperature as well as an average temperature of the respective component or component portion is estimated by the method.

Conventional thermal modelling methods may not have provided the maximum temperature as well as the average temperature of a respective component or component portion. When both these temperature values are available, diagnosing and/or controlling the generator may be improved and/or lifetime estimation may be provided.

According to an embodiment of the present invention, the first and/or the second error compensation resistance is calculated based on material and/or dimensions and/or volume and/or equivalent resistance accounting for parallel conduction and/or Eigenvalues in plural directions of the component or component portion, in particular as a sum, across plural (node) indices for three directions, of plural products of sin functions.

The respective power compensation resistances may be derived from the characteristics of the respective modelled generator component or generator component portion.

According to an embodiment of the present invention, each generator component in each of plural spatial regions is modelled by one or more of the plural elementary thermal modelling elements, each one being associated with boundary temperature values for plural directions and bulk temperature values, the thermal connection of the plural generator components or component portions being modelled **by** heat transfer between boundaries of respective adjacent or neighbouring elementary thermal network elements.

The elementary thermal modelling elements are connected to each other according to the spatial arrangement or positions of the respective modelled generator components or generator component portions.

The estimated temperatures at the respective ends of the series connected two conduction thermal resistances (for each of plural directions) may correspond to the temperatures at the boundaries of the respective modelled generator component in the respective direction.

Due to the low thermal conductivities of winding insulation and permanent magnet, the internal heat generation will cause the heat concentration within the solid, and the maximum temperature rise occurs in the spatial midpoint. Therefore, the estimated midpoint temperature is representative to indicate the hotspot temperature. In comparison, the scenario that the boundary temperature is the hotspot temperature rarely occurs when the permanent magnet machine is operating.

The hotspot temperature may correspond to the highest estimated temperature across the entire modelled generator component or generator component portion.

According to an embodiment of the present invention, estimating plural values of temperature comprises applying a heat transfer theorem or energy conservation theorem to the model, and/or wherein estimating plural values of temperature is performed sensorless without measuring any temperature of the generator except a cooling fluid temperature, and/or wherein estimating plural values of temperature is performed in real-time during operation of the generator; and/or estimating generator losses based on the estimated temperature values, and/or estimating wear and/or lifetime of a component or component portion based on the estimated temperature values, and/or diagnosing a fault of a component or component portion based on the estimated temperature values.

Thereby, the model may be implemented using one or more physical laws regarding heat transfer. Furthermore thereby, the method may advantageously be utilized for downstream purposes such as controlling and/or diagnosing.

According to an embodiment of the present invention, the method further comprises, before using the thermal model: performing a model parameter calibration, including calibrating the thermal conductivities and thermal capacities for each of the elementary thermal modelling elements at least one of: the first, the second and/or the third two conduction thermal resistances, the first and/or the second error compensation thermal resistance, by comparing estimated temperature values with measures temperature values and/or minimizing an error function.

The parameter calibration may be needed to be performed only once. After the parameters have been determined or calibrated, the model may be utilized live (in real-time) without any adjustments of the respective model parameters. The temperature values may be measured at the different boundaries of each of the modelled generator component or generator component portions and may also be measured in the bulk region in order to determine the actual hotspot temperatures and also the average temperature. A least-square minimizing of the errors between the estimated temperatures and the measured temperature may be performed for example according to the Gauss minimization of squares errors. Other calibration methods may be available or may be applied. According to an embodiment of the present invention, it is provided a method for controlling a permanent magnet synchronous electrical generator including plural generator components comprising a rotor, permanent magnets and a stator having teeth and windings, the method comprising: performing a method of temperature estimation of the permanent magnet synchronous electrical generator according to one of the preceding embodiments; controlling a permanent magnet synchronous electrical generator based on the estimated plural values of temperature.

When accurate temperature values are estimated, the control of the generator may be improved. In particular, overheating may therefore be avoided by down-regulating one or more reference values when the determined hotspot temperatures and/or average temperature are above one or more temperature threshold(s). Thereby damage or ware of the generator may be reduced.

According to an embodiment of the present invention, the electrical and/or mechanical operation parameters of the generator include at least one of: currents; rotor speed; coolant temperature; ambient temperature.

According to other embodiments, the coolant temperature may not be utilized in operational parameter. Other operational parameters may be utilized or less operational parameters may be utilized.

According to the present invention, it is provided an arrangement, according to claim 11, for temperature estimation of a permanent magnet synchronous electrical generator including plural generator components comprising a rotor, permanent magnets and a stator having teeth and windings, the arrangement comprising: an input port adapted to receive values of electrical and/or mechanical operation parameters of the generator; an implementation of a thermal model for the generator comprising plural elementary thermal modelling elements partially connected to each other in a network for modelling heat conduction, each generator component being modelled by one or more of the plural elementary thermal modelling elements wherein at least one elementary thermal modelling element comprises: for each of plural directions two conduction thermal resistances modelling thermal resistances between the respective portion of the generator component towards its boundary in opposite directions, a star point which is connected to (e.g. three) plural mid points between the respective two conduction thermal resistances; a heat providing and/or absorbing system modelling a heat source and/or heat sink; a first and a second error compensation thermal resistance connected in series between the star point and the heat providing and/or absorbing system; the arrangement comprising: a processor having access to the implementation of a thermal model and being configured to estimating plural values of temperature for the plural elementary modelling elements by feeding the plural values of the operational parameters into the thermal model and modelling heat transfers between and within the plural generator components or portions according to connectivities and thermal resistances within the network and within the elementary thermal modelling elements; wherein for each elementary thermal modelling element the following holds: two first serially connected conduction thermal resistances are provided for a first direction, two second serially connected conduction thermal resistances are provided for a second direction, two third serially connected conduction thermal resistances are provided for a third direction, wherein a first point between the serially connected first two conduction thermal resistances is connected to the star point, wherein a second point between the serially connected second two conduction thermal resistances is connected to the star point, wherein a third point between the serially connected third two conduction thermal resistances is connected to the star point, wherein temperatures at two ends of the two first serially connected conduction thermal resistances are associated with the boundary temperatures of the respective elementary thermal modelling element according to the first direction, wherein temperatures at two ends of the two second serially connected conduction thermal resistances are associated with the boundary temperatures of the respective elementary thermal modelling element according to the second direction, wherein temperatures at two ends of the two third serially connected conduction thermal resistances are associated with the boundary temperatures of the respective elementary thermal modelling element according to the third direction.

The arrangement may be configured to perform a method of temperature estimation of the permanent magnet synchronous electrical generator and may be implemented in software and/or hardware.

The processor may comprise arithmetic/logical processing capability and may have access to software instructions or a software program comprising instructions in order or configured to implement or control or carry out the method of temperature estimation.

According to an embodiment of the present invention, it is provided a controller for controlling a permanent magnet synchronous electrical generator including plural generator components comprising a rotor, permanent magnets and a stator having teeth and windings, the controller comprising: an arrangement according to the preceding embodiment; a control portion adapted to control the generator based on the estimated temperature values.

According to an embodiment of the present invention, it is provided a wind turbine, comprising: a permanent magnet synchronous electrical generator including plural generator components comprising a rotor, permanent magnets and a stator having teeth and windings; a hub with plural rotor blades, the hub being coupled to the rotor; a controller according to the preceding embodiment.


Brief Description of the Drawings

Embodiments of the present invention are now described with reference to the accompanying drawings. The invention is not restricted to the illustrated or described embodiments.

Fig. 1 schematically illustrates a wind turbine according to an embodiment of the present invention;

Fig. 2 schematically partially illustrates a thermal model as employed according to embodiments of the present invention;

Fig. 3 schematically illustrates elementary thermal modelling elements as employed according to embodiments of the present invention;

Fig. 4 schematically illustrates a portion of a generator in a cross sectional view with network nodes of elementary thermally modelling elements for modelling a generator;

Fig. 5 schematically illustrates in a longitudinal sectional view thermal node configuration of the thermal model of Fig. 4 for modelling a permanent magnet generator;

Fig. 6 schematically illustrates a portion of a thermal model implemented as a network of elementary thermal modelling elements as employed according to embodiments of the present invention;

Fig. 7 schematically illustrates a wind turbine according to an embodiment of the present invention; and

Figs. 8 and 9 schematically illustrate method schemes for setting up a thermal model and/or for calibration of model parameters.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

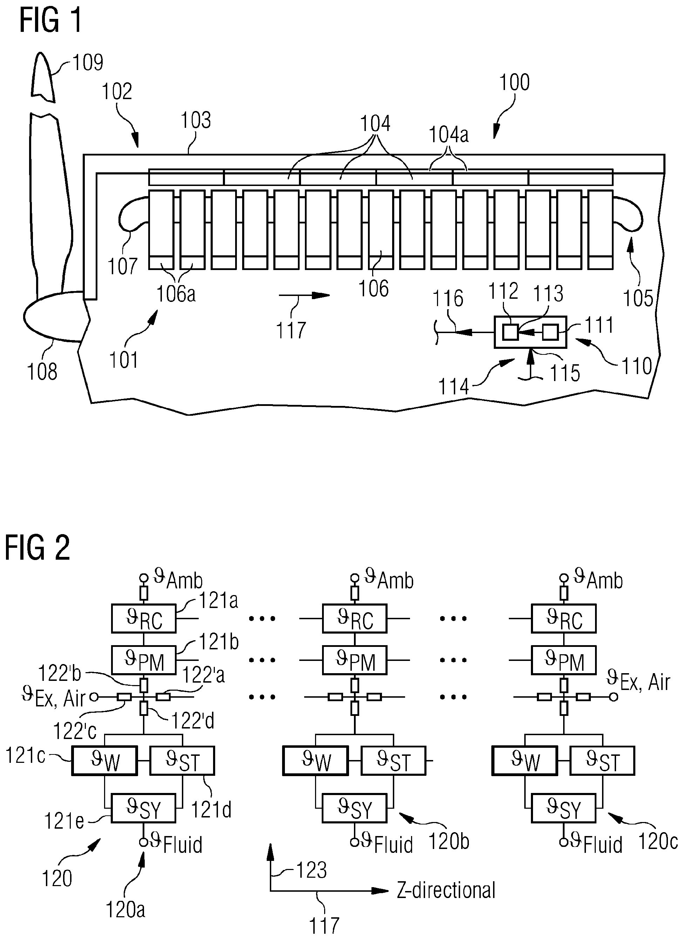

The wind turbine 100 schematically illustrated in **Fig. 1** comprises a permanent magnet synchronous electrical generator 101 including plural generator components including a rotor 102 comprising a rotor house 103 and permanent magnets 104 (on base plates 104a) and a stator 105 having teeth 106 (on support or frame 106a) and windings 107. The generator 101 is an outer rotor generator. The rotor 102 is mechanically connected to a hub 108 at which plural rotor blades 109 are connected. The wind turbine 100 may be a direct drive wind turbine. Thus, the wind turbine 100 may be a gearless wind turbine, wherein the generator 101 is directly connected to the hub 108 without a gearbox in-between.

The wind turbine 100 further comprises a controller 110 for controlling the generator 101 according to an embodiment of the present invention. The controller 110 comprises an arrangement 111 for temperature estimation of the generator 101 according to an embodiment of the present invention. Further, controller 110 comprises a control portion 112 (e.g. including a processor) which is adapted to control the generator 101 based on estimated temperature values 113 which are estimated by the arrangement 111.

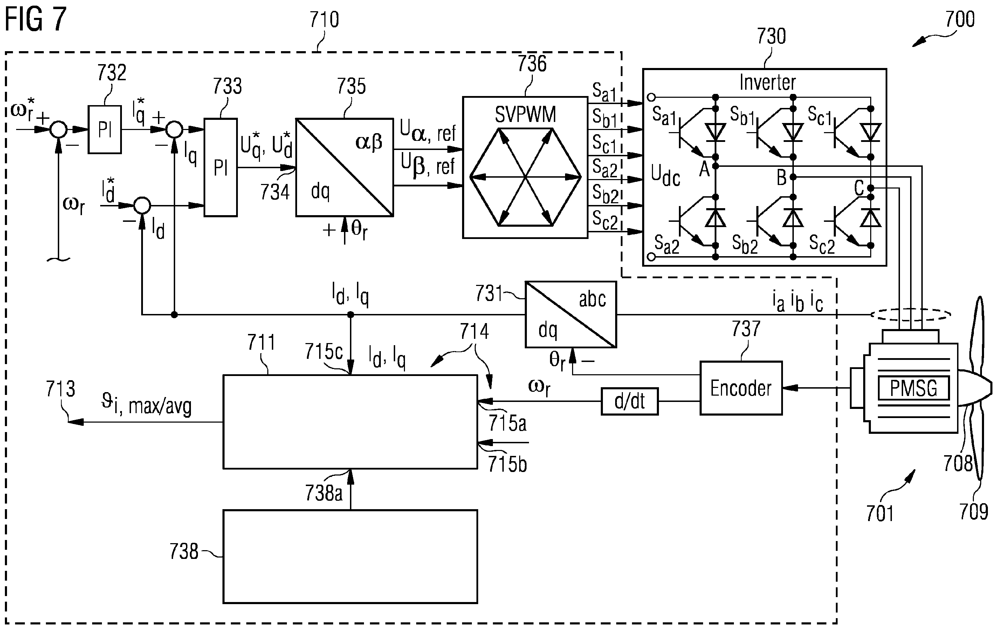

The arrangement 111 will be described in more detail with reference to Fig. 7 below. Briefly, the arrangement 111 receives at an input port 114 values 115 of plural electrical and/or mechanical operation parameters of the generator 101. The arrangement 111 further comprises an implementation of a thermal model for the generator 101. Thereby the arrangement 111 estimates the plural values 113 of the temperature of the different generator components based on the plural values 115 of the operational parameters.

The estimated temperature values 113 are then utilized by the control portion 112 in order to derive control signals 116 which are then utilized to control the generator 101, for example by supplying the control signals 116 to a converter which is connected to the generator 101.

**Fig. 2** schematically illustrates a thermal model 120 as may be utilized by the arrangement 111 illustrated in Fig. 1. The Z-direction thereby corresponds to the axial direction 117 of the generator 101. The thermal model 120 illustrated in Fig. 2 comprises model portions or segments 120a, 120b, ... which each model a particular axial region of the generator 101. Each model portion 120a,b,... comprises plural elementary thermal modelling elements 121a, 121b, 121c, 121d, 121e modelling different generator components or different generator component portions.

For example, the elementary thermal modelling element 121a models a particular axial region of the rotor 102, the element 121b models an axial region of the permanent magnets 104, the element 121c models an axial region of the stator winding 107, the element 121d models an axial region of the stator tooth 106 and the element 121e models an axial region of the stator yoke. According to other embodiments more or less elementary thermal modelling elements 121 may be provided or implemented. Between the rotor and the stator, the air gap is modelled by particular conductance resistances 122'a, 122'b, 122'c, 122'd modelling thermal conduction in the Z-direction (117) and also in the radial direction 123.

Embodiments of the present inventions provide a real-time temperature estimation method for the generator as illustrated in Fig. 1. According to the model 120, both the conductive and also the convection heat transfer are considered.

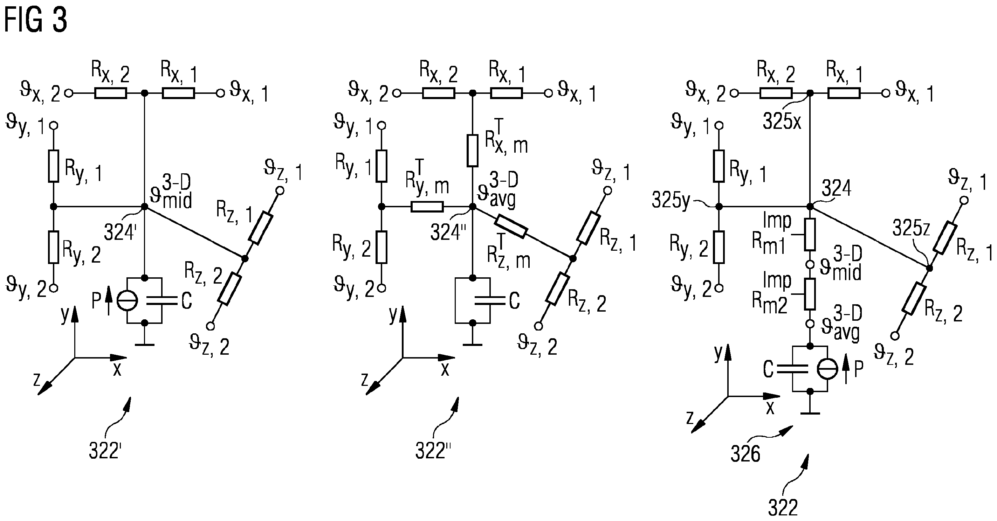

The elementary thermal modelling elements 121a, ... 121e are collectively labelled with reference sign 121. At least one of the elementary thermal modelling elements illustrated in the model 120 of Fig. 2 is configured as the elementary thermal modelling element 322 illustrated in **Fig. 3**. Other elementary thermal modelling elements may be configured as one of the elementary thermal modelling elements 322' or 322" also illustrated in Fig. 3 or also as element 322.

The elementary thermal modelling element 322 schematically illustrated in Fig. 3 comprises for each of plural directions X, Y, Z two conduction thermal resistances ($R\_X,1$, $R\_X,2$ for the X-direction; $R\_Y,1$, $R\_Y,2$ for the Y-direction ; $R\_Z,1$, $R\_Z,2$ for the Z-direction) modelling thermal resistances between the respective portion of the generator component towards its boundary in opposite directions (i.e. in the X-direction, Y-direction and Z-direction). The boundary temperature values are labelled for the X-direction with $\vartheta\_X,1$ and $\vartheta\_X,2$ for the boundaries in the X-direction. Corresponding or analogous nomenclature is used for the Y-direction and Z-direction in Fig. 3.

The elementary thermal modelling element 322 further comprises a star point 324 which is connected to the three plural mid points 325x, 325y, 325z between the respective two conduction thermal resistances $R\_X,1$, $R\_X,2$, .... The elementary thermal modelling element 322 further comprises heat providing and/or absorbing system 326 which models a heat source and/or a heat sink. Furthermore, the elementary thermal modelling element 322 comprises a first and a second error compensation thermal resistance R_M1, R_M2, which are connected in series between the start point 324 and the heat providing and/or absorbing system 326.

The arrangement 111 illustrated within the controller 110 in Fig. 1 uses at least one elementary thermal modelling element as illustrated as the element 322 in Fig. 3 in the model 120 illustrated in Fig. 2 for modelling the generator 101 illustrated in Fig. 1. According to a particular embodiment of the present invention, each of the elementary thermal modelling elements 221a, 221b, 221c, 221d, 221e as illustrated for the model portion 120a and also for the other model portions 120b, ... are implemented according to the element 322 illustrated in Fig. 3. In other embodiments, one or more elementary thermal modelling elements may be implemented according to the elements 322', 322" illustrated in Fig. 3.

All these elementary thermal modelling elements 322, 322', 322" comprise a respective star point 324, 324', 324" and they also comprise the respective two conduction thermal resistances for each of the plural directions. However, the elementary thermal modelling elements 322', 322" illustrated in Fig. 3 can only determine for example a hotspot temperature or an average temperature of a generator component but not both, a hotspot temperature and an average temperature.

The hotspot temperature which can be estimated with the elementary thermal modelling element 322 is labelled with reference $\vartheta\_MID$ and the average temperature is labelled with the reference sign $\vartheta\_avg$. The element 322' may conventionally also be referred to as I-type model and the element 322" may be referred as a T-type elementary element. The conventional I-type and T-type elementary thermal elements are designed to estimate the mid-point and average temperatures, respectively. However, as aforementioned, their estimation accuracy cannot be guaranteed. With those conventional elements 322', 322" it is impossible to estimate the average and mid-point temperatures simultaneously.

In the proposed elementary thermal models, the conduction thermal resistances $R_{\Delta i,1/2}$ are calculated by equation (1) below, which is the same as those in the "I-type" and "T-type" models.

$$R_{\Delta i,1/2} = \frac{l_i}{2\lambda_i A} \tag{1}$$

where $l_i$ and $A$ are the length of the heat flux path and the perpendicular area, respectively. $\lambda_i$ is the thermal conductivity in the i-direction, respectively.

For each component, the temperature rises caused by the difference in boundary temperatures and by the internal heat generation are subject to the principle of superposition. On the one hand, the temperature rise for each component caused by the difference in boundary temperatures can be calculated by the conduction thermal resistances (equation 1). On the other hand, the temperature rise caused by the internal heat generation needs to be calculated based on the multi-dimensional conduction heat transfer equation in (2) under zero boundary temperature conditions.

$$\lambda_x \frac{\partial^2 \vartheta(x,y,z)}{\partial x^2} + \lambda_y \frac{\partial^2 \vartheta(x,y,z)}{\partial y^2} + \lambda_z \frac{\partial^2 \vartheta(x,y,z)}{\partial z^2} + \dot{q} = 0 \tag{2}$$

where $\vartheta$ is the temperature distribution. V is the Laplace operator. $\dot{q}$ is the loss density. $\lambda_x$, $\lambda_y$, and $\lambda_z$ are the thermal conductivities in the x-, y-, and z-directions.

By using the method of separation variables, the final solution of the temperature distribution can be written in (3)

$$\vartheta(x,y,z) = \sum_{m,n,p=\text{odd}} A_{mnp} \sin(\alpha_m x) \sin(\beta_n y) \sin(\gamma_p z) \tag{3(a)}$$

$$A_{mnp} = \frac{-64\dot{q}}{mnp\pi^3(\lambda_x \alpha_m^2 + \lambda_y \beta_n^2 + \lambda_z \gamma_p^2)} \tag{3(b)}$$

where $\alpha_m$, $\beta_n$, and $\gamma_p$ are the eigenvalues in the x-, y-, and z-directions, which are calculated by the zero boundary conditions in (4), and expressed in (5).

$$\vartheta\ (W_s,\ y,\ z)\ =\ 0$$
$$\vartheta\ (x,\ H_s,\ z)\ =\ 0 \tag{4}$$
$$\vartheta\ (x,\ y,\ L_s)\ =\ 0$$

$$\alpha_m = \frac{m\pi}{w_s}, \beta_n = \frac{n\pi}{h_s}, \gamma_p = \frac{p\pi}{l_s} \tag{5}$$

where $W_s$, $H_s$, and $L_s$ are the width, height, and the axial length for the component in the PMSG.

According to (3), the spatial midpoint temperature $\vartheta\_mid$ and the average temperature $\vartheta\_avg$ can be calculated by:

$$\begin{cases} \vartheta_{mid} = \sum_{odd} A_{mnp} \sin\left(\frac{m\pi}{2}\right) \sin\left(\frac{n\pi}{2}\right) \sin\left(\frac{p\pi}{2}\right) \\ \vartheta_{avg} = \sum_{odd} -\frac{8A_{mnp}}{mnp\pi^3} \end{cases} \tag{6}$$

The temperature deviation from that estimated at the star point to the analytically calculated midpoint/average temperatures, i.e., $\vartheta\_mid$ /$\vartheta\_avg$, can be compensated by the two compensation thermal resistances $R_{xyz,m1}^{Imp}$ and $R_{xyz,m2}^{Imp}$, as calculated by (7) and expressed in (8).

$$\begin{cases} R_{xyz,m1}^{Imp} = \frac{\vartheta_{mid}}{P} - R_p \\ R_{xyz,m2}^{Imp} = \frac{\vartheta_{avg}}{P} - \frac{\vartheta_{mid}}{P} \end{cases} \tag{7a}$$

$$R_{p,xyz} = 0.5R_{x,1} \parallel 0.5R_{y,1} \parallel 0.5R_{z,1} = \frac{1}{4w_s h_s l_s \left(\frac{\lambda_x}{w_s^2} + \frac{\lambda_y}{h_s^2} + \frac{\lambda_z}{l_s^2}\right)} \tag{7b}$$

$$R_{xyz,m1}^{Imp} = \sum_{odd} \frac{-64 \sin\left(\frac{m\pi}{2}\right) \sin\left(\frac{n\pi}{2}\right) \sin\left(\frac{p\pi}{2}\right)}{mnp\pi^3 (\lambda_x \alpha_m^2 + \lambda_y \beta_n^2 + \lambda_z \gamma_p^2)V} - R_{p,xyz} \tag{8a}$$

$$R_{xyz,m2}^{Imp} = \sum_{odd} \frac{-64 \sin\left(\frac{m\pi}{2}\right) \sin\left(\frac{n\pi}{2}\right) \sin\left(\frac{p\pi}{2}\right)}{mnp\pi^3 (\lambda_x \alpha_m^2 + \lambda_y \beta_n^2 + \lambda_z \gamma_p^2)V} - \sum_{odd} \frac{8}{mnp\pi^3} \frac{64}{mnp\pi^3 (\lambda_x \alpha_m^2 + \lambda_y \beta_n^2 + \lambda_z \gamma_p^2)V} \tag{8b}$$

where V is the volume of the component. $R_{P,xyz}$ is the equivalent resistance accounting for parallel conduction thermal resistances in the x-, y- and z-directions.

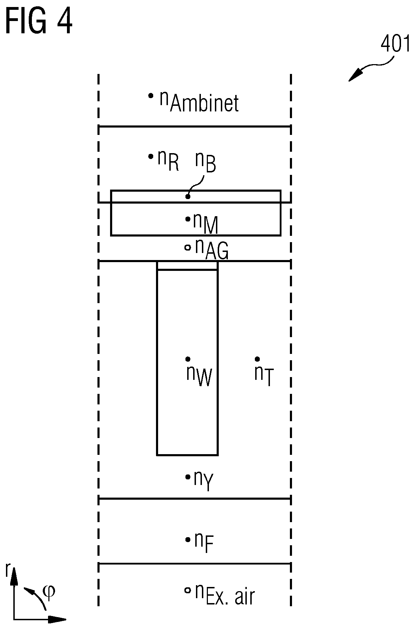

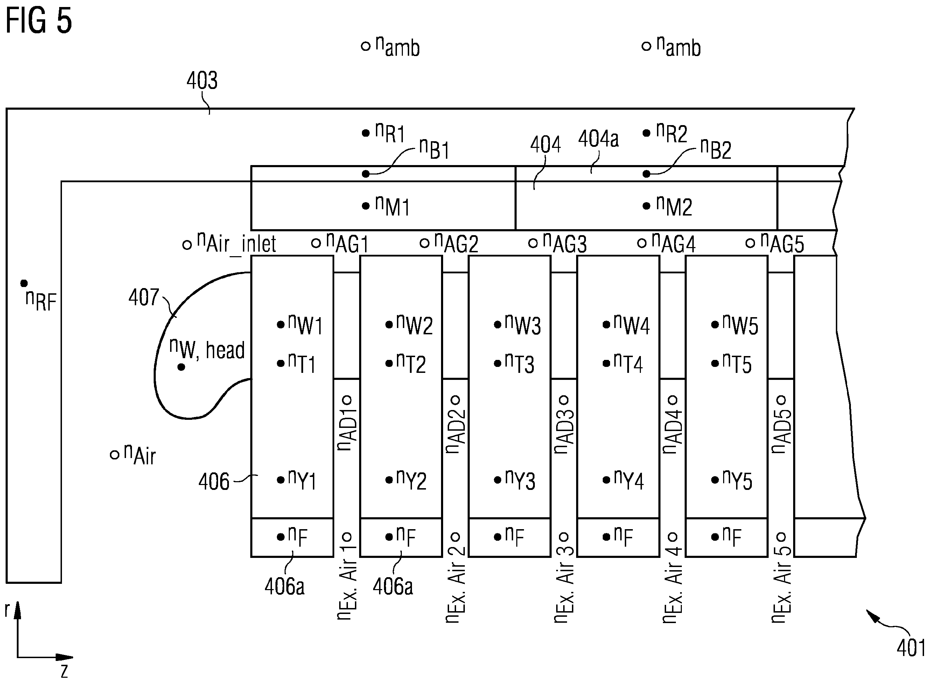

**Figs. 4 and 5** illustrate the thermal node configuration of the modelled generator 401. The nodes carry indices indicating the modelled generator component or generator component portion. For example, the index "ambient" refers to the ambient environment, the index "R" refers to the rotor house, the index "M" refers to the permanent magnets, the index "AG" refers to the air gap, the index "W" refers to the winding, the indices "T" and "Y" refer to the stator yoke or teeth, the index "F" refers to the frame of the stator.

The node configuration illustrated in Figs. 4 and 5 can be adapted according to the requirements and changed by the desire of the thermal designer. The node configuration may vary from a simple configuration with a small number of nodes to a complex configuration with more nodes. Each node may be implemented by one of the elementary thermal modelling elements 322', 322", 322 illustrated in Fig. 3.

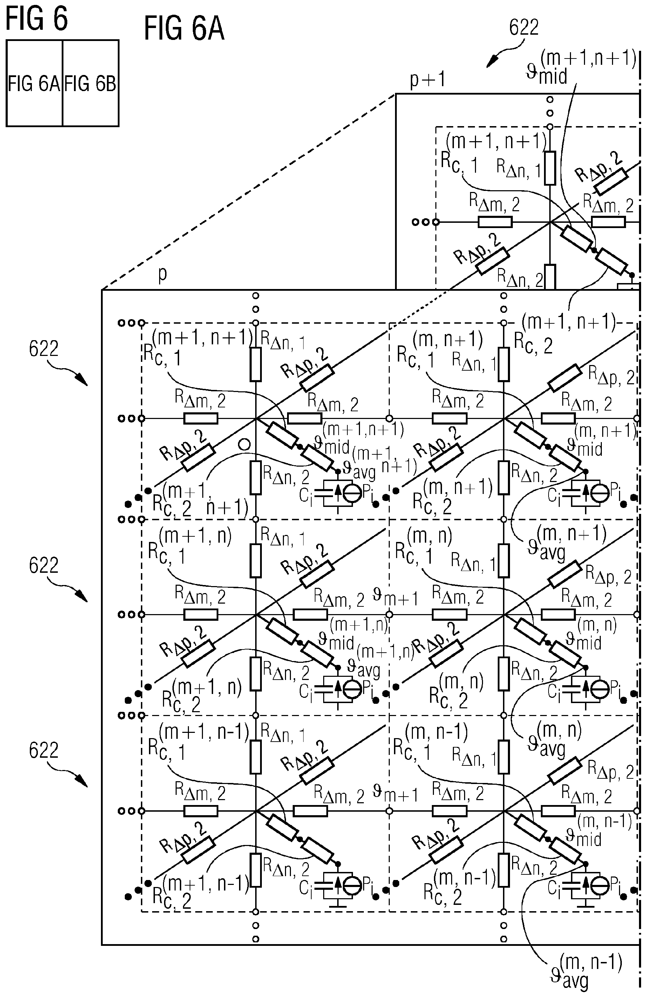

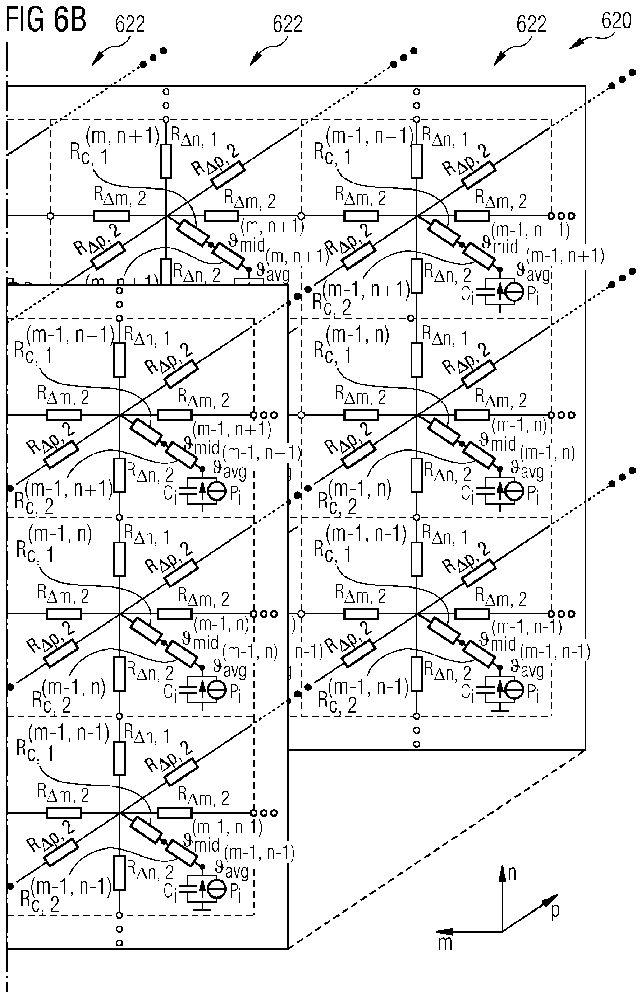

**Fig. 6** schematically illustrates a portion of a thermal model 620 as employed according to embodiments of the present invention. The thermal model 620 may be considered as a high-order discrete thermal model to predict the spatial temperature distribution. The topology in each discrete element 622 of the model 620 illustrated in Fig. 6 may be implemented as an elementary thermal modelling element 322', 322" or 322, wherein at least one of the elements 622 is configured as the exemplary thermal modelling element 322 illustrated in Fig. 3. Also the thermal resistances are derived according to the equations (1) and (8), e.g. Although the complex thermal model may be a computationally time-consuming process, the higher resolution of the thermal network (higher number of nodes) may provide more detail about the temperature distribution in the main components of the generator.

A temperature value $\vartheta\_MID$ estimated between the first and second error compensation resistances R_M1, R_M2 is considered as a hotspot temperature of the modelled component. A temperature value estimated between the second error compensation resistance R_M2 and the heat providing and/or absorbing system 326 illustrated in Fig. 3 is considered as an average temperature $\vartheta\_avg$ of the modelled component.

The first and second error compensation resistances R_M1, R_M2 may be calculated based on the material and/or design and/or shape of the modelled component as is detailed according to equations (7) and (8). Equation (2) may be considered as theorems for heat transfer or energy conservation which may be employed according to embodiments of the present invention. The resistances R_x,1, R_x,2 may be considered as first serially connected conduction thermal resistances for a first direction, namely the X-direction. Analogous nomenclature may apply to the Y- and Z-directions.

**Fig. 7** schematically illustrates a wind turbine 700 according to an embodiment of the present invention. The wind turbine comprises a permanent magnet synchronous electrical generator 701, wherein the rotor is connected to a hub 708 to which plural rotor blades 709 are mounted. In the illustrated embodiment, the generator 701 is connected to an inverter or converter 730 which is controlled by a controller 710.

The controller 710 comprises the arrangement 711 for temperature estimation of the generator 701. At an input port 714 the arrangement 701 receives values 715a, 715b, 715c for plural operational parameters of the generator, in the present case the rotational speed $\Omega\_R$, the coolant and ambient temperatures 715b. The arrangement 711 further receives the currents 715c in the d and q reference frame as electrical input parameter.

The arrangement 711 comprises a thermal model, such as thermal model illustrated in Fig. 2 or 6 for estimating the values 713 of the temperatures for plural generator components. The currents ia, ib, ic of the generator are measured and converted using a transformation module 731 into the rotating d-q frame.

The controller 710 further comprises PI control portions 732, 733, which receive respective error values of rotational speed or currents in order to provide current and/or voltage references 734 in the d-q frame which are then converted to the alpha-beta frame by conversion model 735. Voltage references are then supplied to a space vector pulse width modulation module 736 which thereupon calculates gate signals for plural controllable switches comprised within the inverter or converter 730 for controlling the generator 701. The rotational speed $\Omega\_R$ is measured by an encoder 737.

The controller 710 may or may not comprise also an offline thermal properties calibration module 738 (providing parameters 738 to arrangement 711) which may be utilized for parameter calibration of the model 120 utilized by the arrangement 711. As can be appreciated from Fig. 7, the real-time temperature estimation system is integrated into the controller 710 of the generator 701. The dq-axis currents, rotor speed as well as the coolant and ambient temperatures are measured and these quantities are input for the real-time temperature estimation system or arrangement 711. The real-time temperature estimation system consists of a high fidelity thermal model, for calculation of main machine losses and offline thermal calibration.

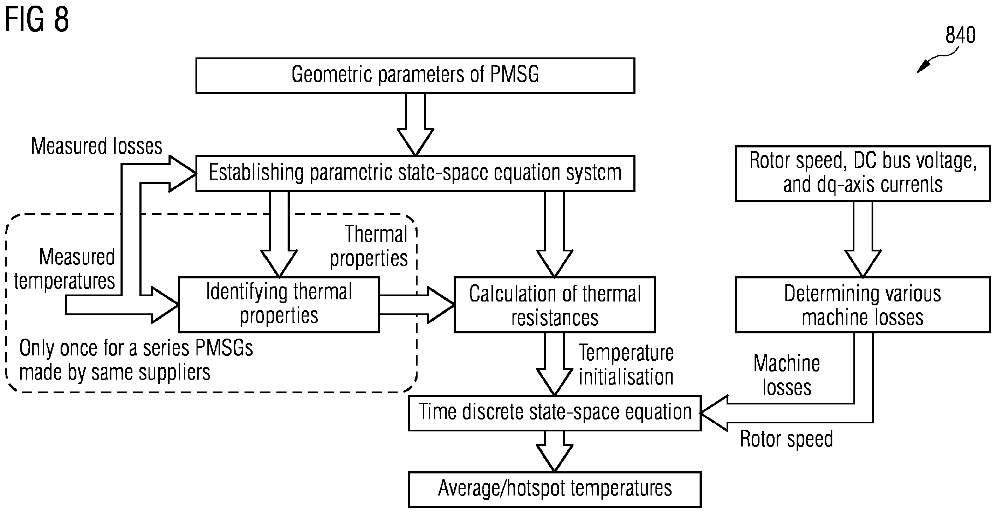

The **Fig. 8** schematically illustrates the complete temperature estimation flowchart 840. Firstly, according to the geometric parameters, the parametric thermal model, as shown in Fig. 2, is established, where the thermal properties, including thermal conductivities, thermal capacities, and contact thermal resistance, are calibrated. More specifically, by using the optimisation algorithm, e.g., particle swarm optimisation, genetic algorithm, and sequential quadratic programming, the thermal parameters are identified by minimising the least square errors of the predicted and measured temperature in eq. (9). The measured temperature information can be obtained from the tests of prototypes. The implementation of the calibration of thermal properties is shown in Figure 7. It is worth noting that the calibration process only needs once based on a prototype PMSG, and then they can be used for the different PMSGs made by the same suppliers.

$$J = \sum_{k}\left(\vartheta_{i,m}[k] - \vartheta_{i,p}[k]\right)^2 \tag{9}$$

where k is the sampling index. $\vartheta_{i,m}$ and $\vartheta_{i,p}$ are the measured and predicted temperatures.

Secondly, the machine losses, including iron loss, PM loss, copper loss, and mechanical loss, are measured/calculated, which can be modelled as the function of rotor speed, dq-axis currents, and DC bus voltage.

Thirdly, since the thermal resistance can be calculated by eqs. (1)-(4) based on the geometric parameters and calibrated thermal properties, the complete thermal model can be described by the state-space equation:

$$\dot{\vartheta} = A(n)\vartheta + B(n)u(\vartheta_{ext}, n, I, U_{DC}) \tag{10}$$

$$y = C\vartheta + Du \tag{11}$$

where $\vartheta$ is the temperature vector. $u$ is the input vector, including the reference temperatures $\vartheta_{ext}$, i.e., ambient and fluid, as well as the machine losses determined by the load conditions $(n,I,U_{DC})$. $A$ and $B$ are the system and input matrices constituted by the thermal resistances. $C$ and $D$ are the identity matrix and the zero matrix, respectively.

Fourthly, for real-time implementation, the state-space equation in (10) and (11) is solved by numerical technique, e.g., the fourth-order Runge-Kutta method, expressed as:

$$\boldsymbol{\vartheta}[k+1] = \boldsymbol{\vartheta}[k] + t_a \sum_{i=1}^{4} b_i s_i \qquad (12)$$

where $b_i$ and $s_i$ are the weighting factor and the slope within the step interval.

Finally, the temperature vector $\vartheta$ involves the information on the average and hotspot temperatures for all components, which will be updated in each sampling period for real-time implementation.

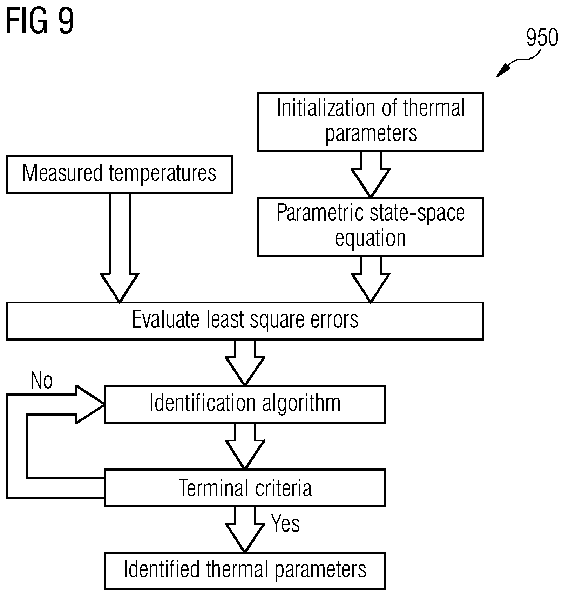

**Fig. 9** illustrates in more detail the calibration methodology 950. Based on measured temperatures and estimated temperatures, model parameters may be adjusted.

Embodiments of the present invention may provide one or more of the following advantages:

- The estimated temperature in the developed system includes both the average and hotspot temperatures with high estimation accuracy, which is more important than the average temperatures calculated based on the estimated stator winding resistance and PM flux linkage.
- The developed temperature estimation system is a non-invasive method, i.e., the injection of additional perturbation signals is not required. Therefore, the temperature estimation will not bring any detrimental impact on the system's reliability and stability.
- The estimation accuracy is robust against the measurement noises and feasible over the entire torque-speed range. However, some identification method is inapplicable at low-speed range due to low signal-to-noise ratio.

Embodiments of the present invention may provide one or more of the following technical features:

- Since the proposed method can be used for online hotspot/average temperature monitoring of PMSG, the number of installed thermal sensors can be minimised or even removed. Therefore, the cost of measurement devices and maintenance will be reduced, while less utilisation of thermal sensors also improves the system stability.
- In the proposed temperature estimation method, the node configuration can be adjusted according to the requirements, and thus, the spatial temperature distribution is predictable. Therefore, the influences of non-uniform loss generation, e.g., PM loss and AC copper loss, can be considered, which may have significant impacts on the maximum temperature rises of the winding and PM.
- The thermal properties of the main components can be calibrated in a prior, and thus, the developed temperature estimation system can be applied to DD PMSG with different sizes, but additional parameter calibration is not necessary.

- The proposed method can be implemented inside the embedded turbine control system to effectively control generator winding temperature and prevent any thermal overload, which can be considered for all SGRE direct drive generators.
- The proposed method would have significant impacts on extending the turbine lifetime (e.g. insulation system) and preventing any thermal overloading conditions, thereby, improving the operation reliability.
- The calibration process only needs once for a series of DD PMSGs made by the same supplier, and thus, the proposed scalable temperature estimation system is time-efficient.

It should be noted that the term "comprising" does not exclude other elements or steps and "a" or "an" does not exclude a plurality. It should also be noted that reference signs in the claims should not be construed as limiting the scope of the claims.

**Claims**

1. Method of temperature estimation of an electrical generator (101) including plural generator components comprising a rotor (102), and a stator (105) having teeth (106) and windings (107), the method comprising:

receiving values (115) of electrical and/or mechanical operation parameters of the generator (101);
using a thermal model (120) for the generator (101) comprising plural elementary thermal modelling elements (121a,b,c,d,e; 322) partially connected to each other in a network for modelling heat conduction,
each generator component being modelled by one or more of the plural elementary thermal modelling elements (322, 322', 322'') wherein at least one elementary thermal modelling element (322) comprises:

for each of plural directions two conduction thermal resistances ($R\_x,1$; $R\_x,2$; $R\_y,1$; $R\_y,2$; $R\_z,1$; $R\_z,2$) modelling thermal resistances between the respective portion of the generator component towards its boundary in opposite directions,
a star point (324) which is connected to plural mid points (325x, 325y, 325z) between the respective two conduction thermal resistances;
a heat providing and/or absorbing system (326) modelling a heat source and/or heat sink;

the method comprising:
estimating plural values (113) of temperature for the plural elementary modelling elements by feeding the plural values (115) of the operational parameters into the thermal model (120) including or implemented in software, and modelling heat transfers between and within the plural generator components or portions according to connectivities and thermal resistances within the network and within the elementary thermal modelling elements, wherein for each elementary thermal modelling element the following holds:

two first ($R\_x,1$; $R\_x,2$) serially connected conduction thermal resistances are provided for a first direction (x),
two second ($R\_y,1$; $R\_y,2$) serially connected conduction thermal resistances are provided for a second direction (y),
two third ($R\_z,1$; $R\_z,2$) serially connected conduction thermal resistances are provided for a third direction (z),
wherein a first point (325x) between the serially connected first two conduction thermal resistances is connected to the star point (324),
wherein a second point (325y) between the serially connected second two conduction thermal resistances is connected to the star point (324),
wherein a third point (325z) between the serially connected third two conduction thermal resistances is connected to the star point (324),
wherein temperatures at two ends of the two first serially connected conduction thermal resistances are associated with the boundary temperatures of the respective elementary thermal modelling element according to the first direction,
wherein temperatures at two ends of the two second serially connected conduction thermal resistances are associated with the boundary temperatures of the respective elementary thermal modelling element according to the second direction,
wherein temperatures at two ends of the two third serially connected conduction thermal resistances are associated with the boundary temperatures of the respective elementary thermal modelling element according to the third direction;
**characterised in that** the at least one elementary thermal modelling element (322) further comprises a first and a second error compensation thermal resistance($R\_ml$, $R\_m2$) connected in series between the star point (324) and the heat providing and/or absorbing system (326).

2. Method according to the preceding claim, wherein a temperature value estimated between the first and the second error compensation resistance ($R\_m1$, $R\_m2$) is considered as a hot spot temperature (theta_mid), in particular maximal temperature, of the respective component or portion.

3. Method according to any one of the preceding claims, wherein a temperature value determined between the second error compensation resistance ($R\_m2$) and the heat providing and/or absorbing system (326) is considered as an average temperature (theta_avg) of the respective component or component portion.

4. Method according to any one of the preceding claims, wherein both a maximum temperature as well as an average temperature of the respective component or component portion is estimated by the method.

5. Method according to any one of the preceding claims, wherein the first and/or the second error compensation resistance ($R\_m1$, $R\_m2$) is calculated based on material and/or dimensions and/or volume and/or equivalent resistance accounting for parallel conduction and/or Eigenvalues in plural directions of the component or component portion, in particular as a sum, across plural (node) indices for three directions, of plural products of sin functions.

6. Method according to any one of the preceding claims, wherein each generator component in each of plural spatial regions is modelled by one or more of the plural elementary thermal modelling elements (322, 322', 322"), each one being associated with boundary temperature values for plural directions and bulk temperature values, the thermal connection of the plural generator components or component portions being modelled by heat transfer between boundaries of respective adjacent or neighbouring elementary thermal network elements.

7. Method according to any one of the preceding claims,

   wherein estimating plural values (113) of temperature comprises applying a heat transfer theorem or energy conservation theorem to the model, and/or
   wherein estimating plural values (113) of temperature is performed sensorless without measuring any temperature of the generator except a cooling fluid temperature, and/or
   wherein estimating plural values (113) of temperature is performed in real-time during operation of the generator; and/or
   estimating generator losses based on the estimated temperature values (113), and/or
   estimating wear and/or lifetime of a component or component portion based on the estimated temperature values, and/or
   diagnosing a fault of a component or component portion based on the estimated temperature values.

8. Method according to any one of the preceding claims, further comprising, before using the thermal model: performing a model parameter calibration, including calibrating for each of the elementary thermal modelling elements at least one of:

   the first, the second and/or the third two conduction thermal resistances ($R\_x,1$; $R\_x,2$; $R\_y,1$; $R\_y,2$; $R\_z,1$; $R\_z,2$),
   the first and/or the second error compensation thermal resistance ($R\_m1$, $R\_m2$),
   by comparing estimated temperature values with measures temperature values and/or minimizing an error function.

9. Method for controlling an electrical generator including plural generator components comprising a rotor, and a stator having teeth and windings, the method comprising:

   performing a method of temperature estimation of the electrical generator (101) according to one of the preceding claims;
   controlling the electrical generator (101) based on the estimated plural values (113) of temperature.

10. Method according to the preceding claim, wherein the electrical and/or mechanical operation parameters (115) of the generator included at least one of:

    currents;
    rotor speed;
    coolant temperature;
    ambient temperature.

11. Arrangement (111, 711) for temperature estimation of an electrical generator (101, 701) including plural generator components comprising a rotor (102), and a stator (105) having teeth (106) and windings (107), the arrangement comprising:

    an input port (114) adapted to receive values (115) of electrical and/or mechanical operation parameters of the generator;
    an implementation solution of a thermal model (120), in particular including or implemented in software, for the generator (101) comprising plural elementary thermal modelling elements (221a,b,c,d,e; 322) partially connected to each other in a network for modelling heat conduction,
    each generator component being modelled by one or more of the plural elementary thermal modelling elements wherein at least one elementary thermal modelling element (322) comprises:

for each of plural directions two conduction thermal resistances (R_x,1; R_x,2; R_y,1; R_y,2; R_z,1; R_z,2) modelling thermal resistances between the respective portion of the generator component towards its boundary in opposite directions,

a star point (324) which is connected to plural mid points (325x, 325y, 325z) between the respective two conduction thermal resistances;

a heat providing and/or absorbing system (326) modelling a heat source and/or heat sink;

the arrangement comprising:

a processor having access to the implementation of a thermal model (120) and being configured to estimate plural values (113) of temperature for the plural elementary modelling elements (121a,b,c,d,e; 322) by feeding the plural values (115) of the operational parameters into the thermal model and modelling heat transfers between and within the plural generator components or portions according to connectivities and thermal resistances within the network and within the elementary thermal modelling elements,

wherein for each elementary thermal modelling element the following holds:

two first (R_x,1; R_x,2) serially connected conduction thermal resistances are provided for a first direction (x), two second (R_y,1; R_y,2) serially connected conduction thermal resistances are provided for a second direction (y),

two third (R_z,1; R_z,2) serially connected conduction thermal resistances are provided for a third direction (z),

wherein a first point (325x) between the serially connected first two conduction thermal resistances is connected to the star point (324),

wherein a second point (325y) between the serially connected second two conduction thermal resistances is connected to the star point (324),

wherein a third point (325z) between the serially connected third two conduction thermal resistances is connected to the star point (324),

wherein temperatures at two ends of the two first serially connected conduction thermal resistances are associated with the boundary temperatures of the respective elementary thermal modelling element according to the first direction,

wherein temperatures at two ends of the two second serially connected conduction thermal resistances are associated with the boundary temperatures of the respective elementary thermal modelling element according to the second direction,

wherein temperatures at two ends of the two third serially connected conduction thermal resistances are associated with the boundary temperatures of the respective elementary thermal modelling element according to the third direction; **characterised in that** the at least one elementary thermal modelling element (322) further comprises a first and a second error compensation thermal resistance (R_m1, R_m2) connected in series between the star point (324) and the heat providing and/or absorbing system (326).

12. Controller (110) for controlling an electrical generator including plural generator components comprising a rotor, and a stator having teeth and windings, the controller comprising:

an arrangement (111) according to the preceding claim;
a control portion (112) adapted to control the generator based on the estimated temperature values.

13. Wind turbine (100), comprising:

an electrical generator (101) including plural generator components comprising at least a rotor (102), and a stator having teeth and windings;
a hub (108) with plural rotor blades (109), the hub being coupled to the rotor (102);
a controller (110) according to the preceding claim,
the generator in particular comprising one of:

a permanent magnet synchronous electrical generator (101) including a rotor (102) with permanent magnets;
an electrically excited asynchronous machine, or doubly fed induction machine.

**Patentansprüche**

1. Verfahren zur Temperaturschätzung eines elektrischen Generators (101), der eine Mehrzahl von Generatorkomponenten beinhaltet, die einen Rotor (102) und einen Stator (105), der Zähne (106) und Wicklungen (107) aufweist, umfassen, wobei das Verfahren Folgendes umfasst:

   Empfangen von Werten (115) von elektrischen und/oder mechanischen Betriebsparametern des Generators (101);
   Verwenden eines thermischen Modells (120) für den Generator (101), das eine Mehrzahl von elementaren thermischen Modellierungselementen (121a,b,c,d,e; 322) umfasst, die zum Modellieren einer Wärmeleitung teilweise in einem Netzwerk miteinander verbunden sind,
   wobei jede Generatorkomponente durch ein oder mehrere der Mehrzahl von elementaren thermischen Modellierungselementen (322, 322', 322") modelliert wird, wobei mindestens ein elementares thermisches Modellierungselement (322) Folgendes umfasst:

   für jede der Mehrzahl von Richtungen zwei leitende thermische Widerstände ($R\_x,1$; $R\_x,2$; $R\_y,1$; $R\_y,2$; $R\_z,1$; $R\_z,2$), welche thermische Widerstände zwischen dem jeweiligen Abschnitt der Generatorkomponente in Richtung seiner Grenze in entgegengesetzten Richtungen modellieren,
   einen Sternpunkt (324), der mit einer Mehrzahl von Mittelpunkten (325x, 325y, 325z) zwischen den jeweiligen zwei leitenden thermischen Widerständen verbunden ist;
   ein Wärme bereitstellendes und/oder absorbierendes System (326), das eine Wärmequelle und/oder eine Wärmesenke modelliert;

   wobei das Verfahren Folgendes umfasst:
   Schätzen einer Mehrzahl von Werten (113) der Temperatur für die Mehrzahl der elementaren Modellierungselemente durch Einspeisen der Mehrzahl von Werten (115) der Betriebsparameter in das thermische Modell (120), welches Software beinhaltet oder in Software implementiert ist, und Modellieren von Wärmeübertragungen zwischen und innerhalb der Mehrzahl von Generatorkomponenten oder -abschnitten gemäß Konnektivitäten und thermischen Widerständen innerhalb des Netzwerks und innerhalb der elementaren thermischen Modellierungselemente,
   wobei für jedes elementare thermische Modellierungselement Folgendes gilt:

   zwei erste ($R\_x,1$; $R\_x,2$) in Reihe verbundene leitende thermische Widerstände sind für eine erste Richtung (x) bereitgestellt, zwei zweite ($R\_y,1$; $R\_y,2$) in Reihe verbundene leitende thermische Widerstände sind für eine zweite Richtung (y) bereitgestellt, zwei dritte ($R\_z,1$; $R\_z,2$) in Reihe verbundene leitende thermische Widerstände sind für eine dritte Richtung (z) bereitgestellt, wobei ein erster Punkt (325x) zwischen den in Reihe verbundenen ersten zwei leitenden thermischen Widerständen mit dem Sternpunkt (324) verbunden ist,
   wobei ein zweiter Punkt (325y) zwischen den in Reihe verbundenen zweiten zwei leitenden thermischen Widerständen mit dem Sternpunkt (324) verbunden ist,
   wobei ein dritter Punkt (325z) zwischen den in Reihe verbundenen dritten zwei leitenden thermischen Widerständen mit dem Sternpunkt (324) verbunden ist,
   wobei Temperaturen an zwei Enden der zwei ersten in Reihe verbundenen leitenden thermischen Widerstände den Grenztemperaturen des jeweiligen elementaren thermischen Modellierelements gemäß der ersten Richtung zugeordnet sind,
   wobei Temperaturen an zwei Enden der zwei zweiten in Reihe verbundenen leitenden thermischen Widerstände den Grenztemperaturen des jeweiligen elementaren thermischen Modellierelements gemäß der zweiten Richtung zugeordnet sind,
   wobei Temperaturen an zwei Enden der zwei dritten in Reihe verbundenen leitenden thermischen Widerstände den Grenztemperaturen des jeweiligen elementaren thermischen Modellierelements gemäß der dritten Richtung zugeordnet sind;
   **dadurch gekennzeichnet, dass** das mindestens eine elementare thermische Modellierungselement (322) ferner einen ersten und einen zweiten Fehlerkompensationswärmewiderstand ($R\_m1$, $R\_m2$) umfasst, die in Reihe zwischen dem Sternpunkt (324) und dem Wärme bereitstellenden und/oder absorbierenden System (326) verbunden sind.

2. Verfahren nach dem vorhergehenden Anspruch, wobei ein Temperaturwert, der zwischen dem ersten und dem zweiten Fehlerkompensationswiderstand ($R\_m1$, $R\_m2$) geschätzt wird, als eine Hot-Spot-Temperatur (theta_mid),

**EP 4 603 815 B1**

insbesondere eine Maximaltemperatur, der jeweiligen Komponente oder des jeweiligen Abschnitts betrachtet wird.

3. Verfahren nach einem der vorhergehenden Ansprüche, wobei ein Temperaturwert, der zwischen dem zweiten Fehlerkompensationswiderstand (R_m2) und dem Wärme bereitstellenden und/oder absorbierenden System (326) bestimmt wird, als eine durchschnittliche Temperatur (theta_avg) der jeweiligen Komponente oder des jeweiligen Komponentenabschnitts betrachtet wird.

4. Verfahren nach einem der vorhergehenden Ansprüche, wobei sowohl eine maximale Temperatur als auch eine durchschnittliche Temperatur der jeweiligen Komponente oder des jeweiligen Komponentenabschnitts durch das Verfahren geschätzt werden.

5. Verfahren nach einem der vorhergehenden Ansprüche, wobei der erste und/oder der zweite Fehlerkompensationswiderstand (R_m1, R_m2) basierend auf Material und/oder Abmessungen und/oder Volumen und/oder äquivalentem Widerstand berechnet werden, unter Berücksichtigung der parallelen Leitung und/oder von Eigenwerten in eine Mehrzahl von Richtungen der Komponente oder des Komponentenabschnitts, insbesondere als eine Summe, über eine Mehrzahl von (Knoten-)Indizes für drei Richtungen, von einer Mehrzahl von Produkten von sin-Funktionen.

6. Verfahren nach einem der vorhergehenden Ansprüche, wobei jede Generatorkomponente in jeder einer Mehrzahl von räumlichen Regionen durch ein oder mehrere der Mehrzahl von elementaren thermischen Modellierungselementen (322, 322', 322") modelliert wird, wobei jedem Grenztemperaturwerte für eine Mehrzahl von Richtungen und Massentemperaturwerte zugeordnet werden, wobei die thermische Verbindung der Mehrzahl von Generatorkomponenten oder Komponentenabschnitten durch Wärmeübertragung zwischen Grenzen von jeweiligen angrenzenden oder benachbarten elementaren thermischen Netzwerkelementen modelliert wird.

7. Verfahren nach einem der vorhergehenden Ansprüche,

   wobei das Schätzen der Mehrzahl von Werten (113) der Temperatur Anwenden eines Wärmeübertragungssatzes oder Energieerhaltungssatzes auf das Modell umfasst und/oder
   wobei das Schätzen der Mehrzahl von Werten (113) der Temperatur sensorlos durchgeführt wird, ohne eine beliebige Temperatur des Generators zu messen, mit Ausnahme einer Kühlfluidtemperatur, und/oder
   wobei das Schätzen der Mehrzahl von Werten (113) der Temperatur in Echtzeit während des Betriebs des Generators durchgeführt wird; und/oder
   Schätzen von Generatorverlusten basierend auf den geschätzten Temperaturwerten (113) und/oder
   Schätzen von Verschleiß und/oder Lebensdauer einer Komponente oder eines Komponentenabschnitts basierend auf den geschätzten Temperaturwerten und/oder
   Diagnostizieren eines Fehlers einer Komponente oder eines Komponentenabschnitts basierend auf den geschätzten Temperaturwerten.

8. Verfahren nach einem der vorhergehenden Ansprüche, ferner umfassend, vor dem Verwenden des thermischen Modells:
   Durchführen einer Modellparameterkalibrierung, die für jedes der elementaren thermischen Modellierungselemente Kalibrieren von mindestens einem der Folgenden beinhaltet:

   der ersten, der zweiten und/oder der dritten zwei leitenden thermischen Widerstände (R_x,1; R_x,2; R_y,1; R_y,2; R_z,1; R_z,2),
   des ersten und/oder des zweiten Fehlerkompensationswärmewiderstands (R_m1, R_m2),
   durch Vergleichen von geschätzten Temperaturwerten mit Maßen der Temperaturwerte und/oder Minimieren einer Fehlerfunktion.

9. Verfahren zum Steuern eines elektrischen Generators, der eine Mehrzahl von Generatorkomponenten beinhaltet, die einen Rotor und einen Stator, der Zähne und Wicklungen aufweist, umfassen, wobei das Verfahren Folgendes umfasst:

   Durchführen eines Verfahrens zur Temperaturschätzung des elektrischen Generators (101) nach einem der vorhergehenden Ansprüche;
   Steuern des elektrischen Generators (101) basierend auf der geschätzten Mehrzahl von Werten (113) der Temperatur.

17

**10.** Verfahren nach dem vorhergehenden Anspruch, wobei die elektrischen und/oder mechanischen Betriebsparameter (115) des Generators mindestens eines der Folgenden beinhalten:

Ströme;
eine Rotorgeschwindigkeit;
eine Kühlmitteltemperatur;
eine Umgebungstemperatur.

**11.** Anordnung (111, 711) zur Temperaturschätzung eines elektrischen Generators (101, 701), der eine Mehrzahl von Generatorkomponenten beinhaltet, die einen Rotor (102) und einen Stator (105), der Zähne (106) und Wicklungen (107) aufweist, umfassen, wobei die Anordnung Folgendes umfasst:

einen Eingangsanschluss (114), der dazu ausgelegt ist, Werte (115) von elektrischen und/oder mechanischen Betriebsparametern des Generators zu empfangen;
eine Implementierungslösung eines thermischen Modells (120) für den Generator (101), das insbesondere Software beinhaltet oder in Software implementiert ist und das eine Mehrzahl von elementaren thermischen Modellierungselementen (221a,b,c,d,e; 322) umfasst, die zum Modellieren einer Wärmeleitung teilweise in einem Netzwerk miteinander verbunden sind,
wobei jede Generatorkomponente durch ein oder mehrere der Mehrzahl von elementaren thermischen Modellierungselementen modelliert wird, wobei mindestens ein elementares thermisches Modellierungselement (322) Folgendes umfasst:

für jede der Mehrzahl von Richtungen zwei leitende thermische Widerstände (R_x,1; R_x,2; R_y,1; R_y,2; R_z,1; R_z,2), welche thermische Widerstände zwischen dem jeweiligen Abschnitt der Generatorkomponente in Richtung seiner Grenze in entgegengesetzten Richtungen modellieren,
einen Sternpunkt (324), der mit einer Mehrzahl von Mittelpunkten (325x, 325y, 325z) zwischen den jeweiligen zwei leitenden thermischen Widerständen verbunden ist;
ein Wärme bereitstellendes und/oder absorbierendes System (326), das eine Wärmequelle und/oder eine Wärmesenke modelliert;

wobei die Anordnung Folgendes umfasst:
einen Prozessor, der Zugriff auf die Implementierung eines thermischen Modells (120) aufweist und zu Folgendem konfiguriert ist: Schätzen einer Mehrzahl von Werten (113) der Temperatur für die Mehrzahl der elementaren Modellierungselemente (121a,b,c,d,e; 322) durch Einspeisen der Mehrzahl von Werten (115) der Betriebsparameter in das thermische Modell und Modellieren von Wärmeübertragungen zwischen und innerhalb der Mehrzahl von Generatorkomponenten oder -abschnitten gemäß Konnektivitäten und thermischen Widerständen innerhalb des Netzwerks und innerhalb der elementaren thermischen Modellierungselemente, wobei für jedes elementare thermische Modellierungselement Folgendes gilt:

zwei erste (R_x,1; R_x,2) in Reihe verbundene leitende thermische Widerstände sind für eine erste Richtung (x) bereitgestellt, zwei zweite (R_y,1; R_y,2) in Reihe verbundene leitende thermische Widerstände sind für eine zweite Richtung (y) bereitgestellt, zwei dritte (R_z,1; R_z,2) in Reihe verbundene leitende thermische Widerstände sind für eine dritte Richtung (z) bereitgestellt, wobei ein erster Punkt (325x) zwischen den in Reihe verbundenen ersten zwei leitenden thermischen Widerständen mit dem Sternpunkt (324) verbunden ist,
wobei ein zweiter Punkt (325y) zwischen den in Reihe verbundenen zweiten zwei leitenden thermischen Widerständen mit dem Sternpunkt (324) verbunden ist,
wobei ein dritter Punkt (325z) zwischen den in Reihe verbundenen dritten zwei leitenden thermischen Widerständen mit dem Sternpunkt (324) verbunden ist,
wobei Temperaturen an zwei Enden der zwei ersten in Reihe verbundenen leitenden thermischen Widerstände den Grenztemperaturen des jeweiligen elementaren thermischen Modellierungselements gemäß der ersten Richtung zugeordnet sind,
wobei Temperaturen an zwei Enden der zwei zweiten in Reihe verbundenen leitenden thermischen Widerstände den Grenztemperaturen des jeweiligen elementaren thermischen Modellierungselements gemäß der zweiten Richtung zugeordnet sind,
wobei Temperaturen an zwei Enden der zwei dritten in Reihe verbundenen leitenden thermischen Widerstände den Grenztemperaturen des jeweiligen elementaren thermischen Modellierungselements gemäß der dritten Richtung zugeordnet sind; **dadurch gekennzeichnet, dass** das mindestens eine elementare thermische Modellierungselement (322) ferner einen ersten und einen zweiten Fehlerkompensationswärmewiderstand

**EP 4 603 815 B1**

(R_m1, R_m2) umfasst, die in Reihe zwischen dem Sternpunkt (324) und dem Wärme bereitstellenden und/oder absorbierenden System (326) verbunden sind.

12. Steuerung (110) zum Steuern eines elektrischen Generators, der eine Mehrzahl von Generatorkomponenten beinhaltet, die einen Rotor und einen Stator, der Zähne und Wicklungen aufweist, umfassen, wobei die Steuerung Folgendes umfasst:

   eine Anordnung (111) nach dem vorhergehenden Anspruch;
   einen Steuerabschnitt (112), der dazu ausgelegt ist, den Generator basierend auf den geschätzten Temperaturwerten zu steuern.

13. Windkraftanlage (100), umfassend:

   einen elektrischen Generator (101), der eine Mehrzahl von Generatorkomponenten beinhaltet, die mindestens einen Rotor (102) und einen Stator, der Zähne und Wicklungen aufweist, umfassen;
   eine Nabe (108) mit einer Mehrzahl von Rotorblättern (109), wobei die Nabe an den Rotor (102) gekoppelt ist;
   eine Steuerung (110) nach dem vorhergehenden Anspruch,
   wobei der Generator insbesondere eines der Folgenden umfasst:

      einen elektrischen Permanentmagnet-Synchrongenerator (101), der einen Rotor (102) mit Permanentmagneten beinhaltet;
      eine elektrisch angeregte Asynchronmaschine oder doppelt gespeiste Induktionsmaschine.

**Revendications**

1. Procédé d'estimation de température d'un générateur électrique (101) incluant plusieurs composants de générateur comprenant un rotor (102), et un stator (105) ayant des dents (106) et des enroulements (107), le procédé comprenant :

   la réception de valeurs (115) de paramètres de fonctionnement électriques et/ou mécaniques du générateur (101) ;
   l'utilisation d'un modèle thermique (120) pour le générateur (101) comprenant plusieurs éléments de modélisation thermique élémentaires (121a,b,c,d,e ; 322) partiellement connectés les uns aux autres dans un réseau pour modéliser la conduction thermique,
   chaque composant de générateur étant modélisé par un ou plusieurs de la pluralité d'éléments de modélisation thermique élémentaires (322, 322', 322") dans lequel au moins un élément de modélisation thermique élémentaire (322) comprend :

      pour chacune de plusieurs directions, deux résistances thermiques de conduction (R_x,1 ; R_x,2 ; R_y,1 ; R_y,2 ; R_z,1 ; R_z,2) modélisant des résistances thermiques entre la partie respective du composant de générateur vers sa limite dans des directions opposées,
      un point en étoile (324) qui est connecté à plusieurs points médians (325x, 325y, 325z) entre les deux résistances thermiques de conduction respectives ;
      un système de fourniture et/ou d'absorption de chaleur (326) modélisant une source de chaleur et/ou un puits de chaleur ;

   le procédé comprenant :
   l'estimation de plusieurs valeurs (113) de température pour la pluralité d'éléments de modélisation élémentaires en introduisant la pluralité de valeurs (115) des paramètres de fonctionnement dans le modèle thermique (120) inclus ou implémenté dans un logiciel, et la modélisation des transferts de chaleur entre et au sein de la pluralité de composants ou parties de générateur selon les connectivités et les résistances thermiques au sein du réseau et au sein des éléments de modélisation thermique élémentaires,
   dans lequel pour chaque élément de modélisation thermique élémentaire, ce qui suit s'applique :

      deux premières (R_x, 1 ; R_x,2) résistances thermiques de conduction connectées en série sont prévues pour une première direction (x), deux deuxièmes (R_y,1 ; R_y,2) résistances thermiques de conduction connectées en série sont prévues pour une deuxième direction (y), deux troisièmes (R_z,1 ; R_z,2)

19

résistances thermiques de conduction connectées en série sont prévues pour une troisième direction (z), dans lequel un premier point (325x) entre les deux premières résistances thermiques de conduction connectées en série est connecté au point en étoile (324),

dans lequel un deuxième point (325y) entre les deux deuxièmes résistances thermiques de conduction connectées en série est connecté au point en étoile (324),

dans lequel un troisième point (325z) entre les deux troisièmes résistances thermiques de conduction connectées en série est connecté au point en étoile (324),

dans lequel les températures aux deux extrémités des deux premières résistances thermiques de conduction connectées en série sont associées aux températures limites de l'élément de modélisation thermique élémentaire respectif selon la première direction, dans lequel les températures aux deux extrémités des deux deuxièmes résistances thermiques de conduction connectées en série sont associées aux températures limites de l'élément de modélisation thermique élémentaire respectif selon la deuxième direction, dans lequel les températures aux deux extrémités des deux troisièmes résistances thermiques de conduction connectées en série sont associées aux températures limites de l'élément de modélisation thermique élémentaire respectif selon la troisième direction ;

**caractérisé en ce que** l'au moins un élément de modélisation thermique élémentaire (322) comprend en outre une première et une seconde résistance thermique de compensation d'erreur (R_m1, R_m2) connectées en série entre le point en étoile (324) et le système de fourniture et/ou d'absorption de chaleur (326).

2. Procédé selon la revendication précédente, dans lequel une valeur de température estimée entre la première et la seconde résistance de compensation d'erreur (R_m1, R_m2) est considérée comme une température de point chaud (theta_mid), en particulier une température maximale, du composant ou de la partie respective.

3. Procédé selon l'une quelconque des revendications précédentes, dans lequel une valeur de température déterminée entre la seconde résistance de compensation d'erreur (R_m2) et le système de fourniture et/ou d'absorption de chaleur (326) est considérée comme une température moyenne (theta_avg) du composant ou de la partie de composant respective.

4. Procédé selon l'une quelconque des revendications précédentes, dans lequel une température maximale ainsi qu'une température moyenne du composant ou de la partie de composant respective sont toutes deux estimées par le procédé.

5. Procédé selon l'une quelconque des revendications précédentes, dans lequel la première et/ou la seconde résistance de compensation d'erreur (R_m1, R_m2) est calculée sur la base du matériau et/ou des dimensions et/ou du volume et/ou d'une résistance équivalente tenant compte de la conduction parallèle et/ou de valeurs propres dans plusieurs directions du composant ou de la partie de composant, en particulier sous la forme d'une somme, à travers plusieurs indices (de nœuds) pour trois directions, de plusieurs produits de fonctions sinus.

6. Procédé selon l'une quelconque des revendications précédentes, dans lequel chaque composant de générateur dans chacune de plusieurs régions spatiales est modélisé par un ou plusieurs de la pluralité d'éléments de modélisation thermique élémentaires (322, 322', 322"), chacun étant associé à des valeurs de température limites pour plusieurs directions et à des valeurs de température de masse, la connexion thermique de la pluralité de composants ou parties de générateur étant modélisée par un transfert de chaleur entre les limites d'éléments de réseau thermique élémentaires adjacents ou voisins respectifs.

7. Procédé selon l'une quelconque des revendications précédentes,

dans lequel l'estimation de plusieurs valeurs (113) de température comprend l'application d'un théorème de transfert de chaleur ou d'un théorème de conservation de l'énergie au modèle, et/ou

dans lequel l'estimation de plusieurs valeurs (113) de température est effectuée sans capteur, sans mesurer aucune température du générateur à l'exception d'une température de fluide de refroidissement, et/ou

dans lequel l'estimation de plusieurs valeurs (113) de température est effectuée en temps réel pendant le fonctionnement du générateur ; et/ou

l'estimation des pertes du générateur sur la base des valeurs de température (113) estimées, et/ou

l'estimation de l'usure et/ou de la durée de vie d'un composant ou d'une partie de composant sur la base des valeurs de température estimées, et/ou

le diagnostic d'une défaillance d'un composant ou d'une partie de composant sur la base des valeurs de température estimées.

8.  Procédé selon l'une quelconque des revendications précédentes, comprenant en outre, avant l'utilisation du modèle thermique :

la réalisation d'un étalonnage des paramètres du modèle, incluant l'étalonnage pour chacun des éléments de modélisation thermique élémentaires d'au moins l'une parmi :

les première, deuxième et/ou troisième deux résistances thermiques de conduction (R_x,1 ; R_x,2 ; R_y,1 ; R_y,2 ; R_z,1 ; R_z,2),
la première et/ou la seconde résistance thermique de compensation d'erreur (R_m1, R_m2),
en comparant les valeurs de température estimées avec des valeurs de température mesurées et/ou en minimisant une fonction d'erreur.

9.  Procédé de commande d'un générateur électrique incluant plusieurs composants de générateur comprenant un rotor, et un stator ayant des dents et des enroulements, le procédé comprenant :

la réalisation d'un procédé d'estimation de température du générateur électrique (101) selon l'une quelconque des revendications précédentes ;
la commande du générateur électrique (101) sur la base des valeurs (113) estimées de température.

10. Procédé selon la revendication précédente, dans lequel les paramètres de fonctionnement électriques et/ou mécaniques (115) du générateur incluent au moins l'un des éléments suivants :

des courants ;
la vitesse du rotor ;
la température du liquide de refroidissement ;
la température ambiante.

11. Agencement (111, 711) pour l'estimation de température d'un générateur électrique (101, 701) incluant plusieurs composants de générateur comprenant un rotor (102), et un stator (105) ayant des dents (106) et des enroulements (107), l'agencement comprenant :

un port d'entrée (114) adapté pour recevoir des valeurs (115) de paramètres de fonctionnement électriques et/ou mécaniques du générateur ;
une solution de mise en œuvre d'un modèle thermique (120), en particulier incluse ou implémentée dans un logiciel, pour le générateur (101) comprenant plusieurs éléments de modélisation thermique élémentaires (221a,b,c,d,e ; 322) partiellement connectés les uns aux autres dans un réseau pour modéliser la conduction thermique,
chaque composant de générateur étant modélisé par un ou plusieurs de la pluralité d'éléments de modélisation thermique élémentaires dans lequel au moins un élément de modélisation thermique élémentaire (322) comprend :

pour chacune de plusieurs directions, deux résistances thermiques de conduction (R_x,1 ; R_x,2 ; R_y,1 ; R_y,2 ; R_z,1 ; R_z,2) modélisant des résistances thermiques entre la partie respective du composant de générateur vers sa limite dans des directions opposées,
un point en étoile (324) qui est connecté à plusieurs points médians (325x, 325y, 325z) entre les deux résistances thermiques de conduction respectives ;
un système de fourniture et/ou d'absorption de chaleur (326) modélisant une source de chaleur et/ou un puits de chaleur ;

l'agencement comprenant :
un processeur ayant accès à la mise en œuvre d'un modèle thermique (120) et étant configuré pour estimer plusieurs valeurs (113) de température pour la pluralité d'éléments de modélisation élémentaires (121a,b,c,d,e ; 322) en introduisant la pluralité de valeurs (115) des paramètres de fonctionnement dans le modèle thermique et en modélisant les transferts de chaleur entre et au sein de la pluralité de composants ou parties de générateur selon les connectivités et les résistances thermiques au sein du réseau et au sein des éléments de modélisation thermique élémentaires, dans lequel pour chaque élément de modélisation thermique élémentaire, ce qui suit s'applique :

deux premières (R_x,1 ; R_x,2) résistances thermiques de conduction connectées en série sont prévues pour une première direction (x), deux deuxièmes (R_y,1 ; R_y,2) résistances thermiques de conduction connectées en série sont prévues pour une deuxième direction (y), deux troisièmes (R_z,1 ; R_z,2) résistances thermiques de conduction connectées en série sont prévues pour une troisième direction (z), dans lequel un premier point (325x) entre les deux premières résistances thermiques de conduction connectées en série est connecté au point en étoile (324),

dans lequel un deuxième point (325y) entre les deux deuxièmes résistances thermiques de conduction connectées en série est connecté au point en étoile (324),

dans lequel un troisième point (325z) entre les deux troisièmes résistances thermiques de conduction connectées en série est connecté au point en étoile (324),

dans lequel les températures aux deux extrémités des deux premières résistances thermiques de conduction connectées en série sont associées aux températures limites de l'élément de modélisation thermique élémentaire respectif selon la première direction,

dans lequel les températures aux deux extrémités des deux deuxièmes résistances thermiques de conduction connectées en série sont associées aux températures limites de l'élément de modélisation thermique élémentaire respectif selon la deuxième direction,

dans lequel les températures aux deux extrémités des deux troisièmes résistances thermiques de conduction connectées en série sont associées aux températures limites de l'élément de modélisation thermique élémentaire respectif selon la troisième direction ;

**caractérisé en ce que** l'au moins un élément de modélisation thermique élémentaire (322) comprend en outre une première et une seconde résistance thermique de compensation d'erreur (R_m1, R_m2) connectées en série entre le point en étoile (324) et le système de fourniture et/ou d'absorption de chaleur (326).

12. Dispositif de commande (110) pour commander un générateur électrique incluant plusieurs composants de générateur comprenant un rotor, et un stator ayant des dents et des enroulements, le dispositif de commande comprenant :

un agencement (111) selon la revendication précédente ;
une partie de commande (112) adaptée pour commander le générateur sur la base des valeurs de température estimées.

13. Éolienne (100), comprenant :

un générateur électrique (101) incluant plusieurs composants de générateur comprenant au moins un rotor (102), et un stator ayant des dents et des enroulements ;
un moyeu (108) avec plusieurs pales de rotor (109), le moyeu étant couplé au rotor (102) ;
un dispositif de commande (110) selon la revendication précédente, le générateur comprenant en particulier l'un des éléments suivants :

un générateur électrique synchrone à aimants permanents (101) incluant un rotor (102) avec des aimants permanents ;
une machine asynchrone à excitation électrique, ou machine asynchrone à double alimentation.

# FIG 1

# FIG 2

FIG 3

## FIG 4

401

$\bullet\, n_{Ambinet}$

$\bullet\, n_R \quad n_B$

$\bullet\, n_M$

$\circ\, n_{AG}$

$\bullet\, n_W \qquad \bullet\, n_T$

$\bullet\, n_Y$

$\bullet\, n_F$

$\circ\, n_{Ex.\ air}$

$r$

$\varphi$

FIG 5

# FIG 6

| FIG 6A | FIG 6B |
|--------|--------|

# FIG 6A

FIG 6B

FIG 7

700
701
708
709
PMSG
730 Inverter
$S_{c1}$ $S_{b1}$ $S_{a1}$ $U_{dc}$ $S_{c2}$ $S_{b2}$ $S_{a2}$
A B C
737 $i_a$ $i_b$ $i_c$
Encoder
d/dt
$\theta_r$ $\omega_r$
abc / dq
731
736 SVPWM
$S_{a1}$ $S_{b1}$ $S_{c1}$ $S_{a2}$ $S_{b2}$ $S_{c2}$
714 715a 715b
$I_d$, $I_q$ 715c
711
738a
738
713 $\vartheta_{i,\,max/avg}$
735 $\alpha\beta$ / dq $+\theta_r$
$U_{\alpha,\,ref}$ $U_{\beta,\,ref}$
734
733 PI $U_q^*$, $U_d^*$
$I_q$ $I_d$
732 PI
$I_q^*$ $I_d^*$
$\omega_r^*$ $\omega_r$
710

# FIG 8

840

```
                    ┌─────────────────────────────────────────────┐
                    │         Geometric parameters of PMSG         │
                    └─────────────────────────────────────────────┘
                                        │
                                        ▼
Measured losses      ┌─────────────────────────────────────────────┐      ┌──────────────────────────────┐
        ┌──────────▶ │  Establishing parametric state-space        │      │ Rotor speed, DC bus voltage, │
        │            │            equation system                  │      │     and dq-axis currents     │
        │            └─────────────────────────────────────────────┘      └──────────────────────────────┘
```

Measured losses

Establishing parametric state-space equation system

Rotor speed, DC bus voltage, and dq-axis currents

Thermal properties

Measured temperatures

Identifying thermal properties

Calculation of thermal resistances

Determining various machine losses

Only once for a series PMSGs made by same suppliers

Temperature initialisation

Machine losses

Time discrete state-space equation

Rotor speed

Average/hotspot temperatures

EP 4 603 815 B1

# FIG 9

950

Initialization of thermal parameters

Measured temperatures

Parametric state-space equation

Evaluate least square errors

No

Identification algorithm

Terminal criteria

Yes

Identified thermal parameters

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012226483 A
- US 2019114385 A1

- US 2020341062 A1

**Non-patent literature cited in the description**

- Thermal Modeling of Hollow Conductors for Direct Cooling of Electrical Machines. **CHEN XIAO et al.** IEEE TRANSACTIONS ON INDUSTRIAL ELEC-TRONICS. IEEE SERVICE CENTER, 01 February 2020, vol. 67, 895-905

- Tracking of Winding and Magnet Hotspots in SPMSMs Based on Synergized Lumped-Parameter and Sub-Domain Thermal Models. **LIANG DAWEI et al.** IEEE TRANSACTIONS ON ENERGY CONVER-SION. IEEE SERVICE CENTER, 08 March 2022, vol. 37, 2147-2161